# EUROPEAN PATENT APPLICATION

(11) **EP 4 365 155 A1**
(43) Date of publication of application: **08.05.2024**
(21) Application number: 22383067.0
(22) Date of filing: 07.11.2022
(51) Int. Cl.: C05C 9/00, C05G 5/30

(54) **FERTILIZER UREA-BASED COMPOSITIONS COMPRISING SULFUR AND PROCESS AND SYSTEM THEREOF**

(71) Applicant: FERTILIZANTES GOMBAU, S.L., 43540 Sant Carles de la Rapita (Tarragona) (ES)
(72) Inventor: CABRERA GOMBAU, Carlos Agustin, 43540 SANT CARLES DE LA RAPITA (TARRAGONA) (ES)
(74) Representative: Isern Patentes y Marcas S.L.

(57) **Abstract**

The present invention relates to a fertilizing composition comprising:
- urea granules comprising urea in an amount from 95-100 % w/w of urea wherein the urea granules are in the composition in a range from 90-98% w/w;
- a layer which comprises sulfur having a particle size from 5 to 80 µm measured by laser diffraction and at least a binder;
wherein the urea granules are at least partially coated by the sulfur layer; and wherein the layer is in an amount in the composition from 2-10% w/w.

In addition, the present invention relates to a method thereof and system to manufacture said fertilizer composition in a safe and effective way.

## Description

### TECHNICAL FIELD

The invention relates to the field of fertilizers to improve crop productivity, particularly with urea-based fertilizer compositions comprising sulfur which have a controlled release of nutrients and a low loss of said nutrients, for example in the form of ammonia. the invention also relates to safe and efficient processes and systems to obtain said compositions.

### BACKGROUND

Plants, to optimize their vegetative and productive cycle, need a minimum of nutrients, water, light and air to perform photosynthesis (CO₂ fixation) and produce carbonated compounds (C hydrates, proteins, fats, vitamins, etc.). During photosynthesis transpiration occurs, by which water evaporates by stomata from the leaf surface to the atmosphere; and for this reason, a negative osmotic gradient is generated in the root system that allows water, and nutrients dissolved in the liquid phase of the soil to be passively absorbed by the roots. During the "dark cycle" (in the absence of light and decreased perspiration), the root can generate a positive osmotic gradient to absorb water and essential nutrients through an active process. Therefore, essential nutrients and solutes can be diffused through the plant passively or actively.

However, usually the mechanisms involved in the absorption and assimilation of nutrients, either passively or actively, are usually not effective enough to obtain the maximum energy yield from photosynthesis at times of maximum light intensity. In this aspect, absorption efficiency is usually related to the physicochemical properties of soils (nutrient content, nature of solutes, texture or size of particles, pH, redox conditions, salinity, etc.), and to the adaptability of each crop to each type of soil.

Conventional fertilization has contributed greatly to renewing the nutrients of agricultural soils, although it is known that significant losses of uncontrolled nutrients (leaching, volatilization, precipitation, etc.) are a common issue, which prevent the complete availability of the fertilizer. In this sense, the developmentof new strategiesin fertilizer formulas can efficiently and effectively solve these problems, and at the same time increase crop productivity.

Urea is the most widely used nitrogen fertilizer worldwide. Urea commonly used in the form of sulfur-coated granules. The main problem with the use of urea is volatility losses. In soils with pH above 7 the enzyme called urease metabolizes urea resulting in ammonia (NH₃) accompanied by carbon dioxide (CO₂). If the pH is basic, the ammonium ion is released into the atmosphere in the form of ammonia, NH₃, this compound being a gas at alkaline pH, in the same way it happens with carbon dioxide (CO₂). On the other hand, if the pH is acidic, both ammonia and carbon dioxide are protonated forming the ammonium ion (NH₄⁺) and the bicarbonate counterion (HCO₃). The acidic pH and the contribution of protons come from the reaction in the soil of the elemental sulfur with the bacteria of the genus *thiobacter,* these metabolize sulfur into sulfuric acid, that is, they oxidize sulfur to sulfate (S + 2O₂ → (SO₄⁻²) consuming water and generating protons (H₃O⁺). Ammonium sulfate ((NH₄)₂SO₄) is quickly formed and the pH of the medium closest to the rest of the urea molecules is lowered, thus favoring immediate absorption by plants, and avoiding losses due to ammonia volatilization.

It is estimated that more than 10% of the urea applied to the soil is lost in the form of ammonia via volatilization o leaching, because of the action of soil microorganisms, which causes a decrease in the yield of the fertilizer andconsequently a decrease of the harvest. Furthermore, it could entail a significant environmental problem due to the release, not negligible, into the atmosphere of ammonia. Furthermore, the release of ammonia may causeserious chemical burns in the first cycles of most crops.

The production of urea-based fertilizers comprising sulfur is a known alternative to control the availability of nutrients of urea fertilizer.

For instance, US5599374 disclosed a sulfur-coated urea fertilizer and a process thereof, wherein the sulfur-coated urea fertilizers have a high load of sulfur, about 12,5 %, by applying a coating of molten sulfur, thus applying a layer of amorphous sulfur, on the surface of the granules. Afterwards a coating of reactive monomers to produce and in-situ polymer is applied on the surface of the sulfur-coated granules to form an impact resistant polymer sealant coating, said monomers being a diisocyanate and a polyol mixture of diethylene glycol and triethanolamine. Manufacturing processes which use molten sulfur present thedisadvantages that difficulty that they involved a complex handling and highcost of energy, which would also imply having an installation dedicated to it. Moreover, molten sulfur produces a layer on the surface of the granules that could act as capsule that prevents the correct release of the nutrients, as amorphous sulfur, or high particle size sulfur difficult to control can be produced. Therefore, there is a need to prepare other compositions which ensure a correct and controlled releaseof nitrogen in the soil by means of industrially feasible methods.

Another process disclosed in NZ562658Adisclosed a soil treatment composition in granular form. Said soil treatment composition wasin granular form including particulate elemental sulfur and urea, wherein the sulfur has a low particle size and said sulfur is then intimately mixed throughout the granule. Both the urea and elemental sulfur are finely ground and homogeneously mixed toensure intimate contact between the different particle types. The urea and sized elemental sulfur were interground and/or mixed by means of a doublescrew auger mixer and approximately from 0% to 10% of moisture was added during the production process.

The pressed sheets were then broken up by means of a rotating finger type device to produce 1mm-6mm long granules. However, as it is explained, elemental sulfur was intimately mixed throughout the granule, therefore not all the sulfur in the granule is totally exposed and this could difficult its metabolization by bacteria of the genus *thiobacter.* This fact could lead to a decreased absorption of sulfur by plantsso that it is needed to develop new urea granule compositionscomprising sulfur that allow an improvedaccessibilityof sulfur for its metabolization and absorption. The granules also comprise urease inhibitors.

EP352618081 disclosed a urea-based composition comprising liquid urea mixed with elemental sulfur in powder form and ureaformaldehyde conditioning agent, at atemperature of about 130 °C to obtain a melt mix with sulfur. Afterwards, the produced granules were coated with aurease inhibitor of the type phosphoric triamide, in particular N-(n-butyl) thiophosphorictriamide (nBTPT). The use of, N-(n-butyl) thiophosphorictriamide (nBTPTon the urea-based fertilizer reduced the rate at which urea is hydrolysed to ammonia in the soil.

Therefore, there is a need to overcome the aforementioned problems and todevelop an effective urea-based fertilizer having a balanced amount of sulfur, a low loss of nutrients, a good nitrogen and sulfur absorption and a good crop productivityand a safe method of manufacturing thereof.

### BRIEF DESCRIPTION

The present invention solves the stated problems of the prior art by the provision of effectiveurea-based granules coated with elemental sulfur and method of manufacturing thereof.

In addition, the present invention relates to a method and system that allows the manufacture of the aforementioned granules in a safe and effective way.

First aspect of the invention relates to a fertilizing composition comprising:
- urea granules comprising urea in an amount from 95-100 % w/w of urea wherein the urea granules are in the composition in a range from 90-98% w/w;
- a layer which comprises sulfur having a particle size from 5 to 80 µm measured by laser diffraction and at least a binder;
   wherein the urea granules are at least partially coated by the sulfur layer; and
   wherein the layer is in an amount in the composition from 2-10% w/w.

The fertilizing composition of the first aspect of the invention, has low loss of nutrients, a good nitrogen and sulfur absorption and a good crop productivity while at the same time is safe and can be manufactured by means of a safe process. Furthermore, the fertilizing composition of the first aspectshowed a controlled release of ammonium.

The fertilizing composition of the first aspect of the invention, provides a good balance between the amount of urea and sulfur, which helps the interaction with the soil bacteria of the genus *thiobacter,* which metabolizes elemental sulfur by converting it into sulfuric acid that would further react with the ammonia released by urea forming ammonium sulphate, the latter is easily absorbed by plants, thus retaining nitrogen and minimizing the losses of ammonia by volatilization or leaching.

Moreover, the composition of the first aspect avoids the use of chemicals such as inhibitors or other synthetic compounds which need to be employed when coating urea.

The second aspect of the invention relates to a method to prepare the composition of the first aspect comprising the steps of:
a- Coating urea granules, with a binder, in an amount from 0.1-4% w/w to the weight of the urea granules;
b-Applying a coating comprising sulfur onto the urea granules obtained in the previous step, to provide at least partially coated or fully coated sulfur urea granules,
c-Applying a second coating comprising binder onto the granules obtained in the previous step, wherein the amount of binder the weight of the granules to be coated, added in this step, is from 0.1-1 % w/w;
d- mixing the granules obtained in the previous step at a temperature range from 5-30°C in a closed environment.

The method of the second aspect has the advantage that it is a safe as it does not generate an explosive atmosphere, which can be produced whensulfur or elemental sulfur in powder form is used. Furthermore, the method of the second aspect also allows to produce and tailor-make urea granules coated with a high % of sulfur particles of a variable and also of a specific size.

The process avoids the use of melted sulfur which difficult to handle and expensive an also implies the need of a system or facility specifically dedicated to application of molten sulfur. It allows the use of low particle size sulfur (micronized sulfur) preventing the formation of caking of the sulfur particles.

Third aspect of the invention relates to a system for carrying out the method according to the second aspect of the invention, the system comprising:
- a first hopper configured for receiving urea granules to feed urea granules to a wormscrew,
- a second hopper configured for receiving a binder and to feed said binder to the feed urea granules deposited on a worm screw or a binder tank configured to feed the binder to the feed urea granules deposited on a worm screw,
- a third hopper configured for receiving the micronized sulfur and to feed micronized sulfur to a wormscrew,
- a first worm screw connected to the first hopper, to the second hopper or binder tank, third hooper;
- a blending mixer or a second wormscrew configured to homogenize solid mixtures, which are connected to the first wormscrew, at the end section of the first wormscrew,
   wherein the worm screw is configured to convey urea granules, dropped from the first hooper, while they are coated with a binder and with micronized sulfur towards the blending mixer or to the second wormscrew and,
   wherein the first worm screw is arranged within a housing, and the housing comprises an opening configured to feed the granules, the binder and the sulfur inside the housing directly on the worm screw.

The system of the third aspect provides a safe atmosphere and it does not generate an explosive atmosphere and prevents the production of explosions which that can occur whensulfur or elemental sulfur in powder form is used. The system also allows the use of highly pure sulfur in powder form with low particle size, avoiding the need to mix said sulfur with other excipients to prevent explosions or to reduce the risk of generating explosive atmospheres.

Furthermore, the method of the second aspect also allows to produce and tailor-make urea granules having a specific size and high sulfur load, particularly of micronized sulfur.

The urea coated granules of the first and second aspect can be obtained at high speed and in a reliable and reproducible manner.

The system has the advantage that allows a high throughput of the composition according to the first aspect and the composition obtained according to the second aspect, being as good as 15000-20000 kg/h.

The fourth aspect of the invention relates to the use of the composition according to the first aspect and the composition obtained according to the second aspect for fertilizing crops.

Crops that were fertilized with the fertilizing composition of the first aspect increased their productivity.

### DETAILED DESCRIPTION

First aspect of the invention relates to a fertilizing composition comprising:
- urea granules comprising urea in an amount from 95-100 % w/w of urea wherein the urea granules are in the composition in a range from 90-98% w/w;
- a layer which comprises sulfur having a particle size from 5 to 80 µm measured by laser diffraction and at least a binder;
   wherein the urea granules are at least partially coated by the sulfur layer; and
   wherein the layer is in an amount in the composition from 2-10% w/w.

The fertilizing composition of the first aspect of the invention, has low loss of nutrients, a good nitrogen and sulfur absorption and a good crop productivity while at the same time is safe and can be manufactured by means of a safe process. Furthermore, fertilizing composition of the first aspect showed anextended release of nitrogen and a significant drop in the loss of nitrogen via ammonium by means of volatilization or by leaching, Furthermore, itcontributes to an increased production of phytoalexins.

In a preferred embodiment of the first aspect, the sulfur is an elemental sulfur, which unlocks and improves soil's structure. Elemental sulfur is also a valuable plant nutrient.

In another preferred embodiment of the first aspect,the sulfur has a particle size from 5-80 µm measured by laser diffraction, preferably from 10-70 µm, more preferably 30-55 µm. The particle size is reported as a volume equivalent sphere diameter. For the present invention, the term particle size is median particle size or the median particle diameter (D50 or Dv50) for a volume distribution. For example, for a powder sample with D50 = 5µm, it means 50% of particles are larger than 5µm and 50% particles are smaller than 5µm.

Preferably, the sulfur of the first aspect was obtained by means of a particle reduction process, such as micronization.

In the composition of the first aspect and all aspects of the present invention, the sulfur particles used to coat the urea granules have a particle size from 5-80 µm measured by laser diffraction, preferably from 10-70 µm, more preferably 30-55 µmmeasured by laser diffraction,and provide a stable formulation and a slow and extended release of nitrogen as well as a decrease in the release of ammonia, avoiding the usual loss of nitrogen in the form of ammonia via volatilization o leaching.Also, it helps to reduce or prevent one of the main problems wherein theurea is broken down into ammonia, by the action of soil microorganisms, thus preventing the release of ammonium into the atmosphere and preventing the formation of chemical burns in the first cycles of most crops. In the context of the present invention the sulfur particles having a low particle size from 5-80 µm measured by laser diffraction, preferably from 10-70 µm, more preferably 30-55 µm, are also referred as micronized sulfur, irrespectively if these particles have not been obtained by means of a micritization process.

In a preferred embodiment of the first aspect, the sulfur is at least 95% pure; preferably at least 98% pure; more preferably; at least 99.5% pure, proving granules having stable composition with a high load of sulfur and higher efficiency of the composition as a fertilizer.The process has the advantage that allows the use of highly pure sulfur in powder form with low particle size, which in consequence reduces the purity and the amount of nitrogen release in the soil and consequently avoids the need to mix said sulfur with other excipientswhile added to the composition, to prevent explosions or to reduce the risk of generating explosive atmospheres.

In a preferred embodiment of the first aspect,the compositioncomprises sulfur is in an amount in the composition from 1.9-9% w/w, preferably form 3-6 % w/w. Thus, the composition has the advantage that can have a high load of sulfur on the surface of the granuleallowing a slow release of nitrogen in the soil and a low loss of nitrogen, for example, in form of ammonia.

Urea is the most common nitrogen-containing fertilizer. Urea has the highest nitrogen content of all nitrogen-containing fertilizers in common use (46 %).In another preferred embodiment of the first aspect, the urea granules are in an amount from 93-97% w/w.In another preferred embodiment of the first aspect, the urea granules are fully coated with the sulfur layer.

In another preferred embodiment of the first aspect, the urea granules have a particle size distribution measured by granulometry, wherein 80% of particles have a particle diameter from 0.5-7mm, preferably the particle diameter is from 2-5.5 mm. More preferably, the urea granules have a particle size distribution measured by granulometry, wherein 80% of particles have a particle diameter from 3.30mm to 6 mm, preferably form 3.30 mm to 5.5 mm and/or a 20% of the of particles have a particle diameter from 1 mm to 3.30mm, preferably from 2 to 3.30 mm. These particle size range of the urea granules reduces the amount of ammonia lost and realise in the atmosphere, increasing the efficacy of the composition and the amount of nitrogen released in the soil.

In a preferred embodiment of the first aspect, the amount of the binder in the composition is from 0.1%-2.5% w/w, preferably from 0.5%-1.5% w/w.The amount of binder and the preferred amount improve the adhesion of the sulfur particles on the urea granules and ensures ahomogeneous distribution on the sulfur particles on the surface of the urea granules which allows a constant release of nitrogen.

In a preferred embodiment of the first aspect, the ratio of sulfur to binderis from 90 to 1 w/w; more preferably from 15-5 w/w, which allows a good adhesion and distribution of the sulfur on the surface of the granule and a good and slow and extended-release rate of the sulfur and nitrogen on the soil. The amount of binder and the preferred amount improves the adhesion ofthe sulfur particles on the urea granules as well as the homogeneous distribution on the sulfur particles on the surface of the urea granules which allows a constant release of nitrogen.

In a preferred embodiment of the first aspect and all aspects of the invention, the binder is selected from the list consisting of water, molasse, wax, glycerin and combinations thereof. Furthermore, the binder provides greater resistance of the urea granule to abrasion and sulfur stripping.

In a preferred embodiment of the first aspect, the binder is wax, selected from polyethylene wax, preferably low-density polyethylene derivates.

In another preferred embodiment of the first aspect, the composition is free of urease inhibitors, preferably phosphoric triamide inhibitors. More preferably, the phosphoric triamide inhibitors areselected form N-(n-butyl) thiophosphorictriamide (NBPT) and N-(n-propyl) thiophosphorictriamide (NPPT). For instance, N-(n-butyl) thiophosphorictriamide (NBPT) or N-(n-propyl) thiophosphorictriamide (NPPT) are labeled as dangerous as they can cause damage fertilityor the unborn child. More preferably, the composition of the first aspect is free of urease inhibitors. The term free of ureaseinhibitors is understood as having less than 0,5 % of ureaseinhibitors, preferably the urea inhibitors are selected form N-(n-butyl) thiophosphorictriamide (NBPT) and N-(n-propyl) thiophosphorictriamide (NPPT). Preferably, it is understood as having less than 0,1 % of ureaseinhibitors, preferably the urea inhibitors are selected form N-(n-butyl) thiophosphorictriamide (NBPT) and N-(n-propyl) thiophosphorictriamide (NPPT). More preferably, it is understood as having less than 0,05 % of ureaseinhibitors, selected N-(n-butyl) thiophosphorictriamide (NBPT) and N-(n-propyl) thiophosphorictriamide (NPPT).

In a preferred embodiment of the first aspect,the composition has a moisture content below 7%; more preferablybelow 3%.The composition has the advantage that it is stable even when the amount of water is below 7%.

In a preferred embodiment of the first aspect, the composition coating that is able to increase at least the water repellence.

In a preferred embodiment, the urea of the granules is supplied in form of urea, urea-ammoniumsulphate, urea-ammonium phosphate, orany combination thereof.

The second aspect of the invention relates to a method to prepare the composition of the first aspect comprising the steps of:
a- Coating urea granules, with a binder, in an amount from 0.1-4% w/w to the weight of the urea granules;
b-Applying a coating comprising sulfur onto the urea granules obtained in the previous step, to provide at least partially coated or fully coated sulfur urea granules,
c-Applying a second coating comprising binder onto the granules obtained in the previous step, wherein the amount of binder the weight of the granules to be coated, added in this step, is from 0.1-1% w/w;
d- mixing the granules obtained in the previous step at a temperature range from 5-30°C in a closed environment.

In a preferred embodiment of the second aspect, as in the first aspect, the sulfur is elemental sulfur.

In a preferred embodiment of the second aspect the sulfur has a particle size from 5-80 µm measured by laser diffraction, preferably from 10-70 µm, more preferably 30-55 µm.

In another preferred embodiment of the second aspect, the micronized sulfur is added to the urea granules as a powder or as an aqueous dispersion, wherein the amount of water to sulphur is in the range from 0.1-10 % w/w, preferably form 1-5% w/w.

In a preferred embodiment of the second aspect, the sulfur is at least 95% pure; preferably at least 98% pure; more preferably; at least 99.5% pure.The process has the advantage that allows the use of highly pure sulfur in powder form with low particle size, which in consequence reduces the purity and the amount of nitrogen release in the soil and consequently avoids the need to mix said sulfur with other excipientswhile added to the composition, to prevent explosions or to reduce the risk of generating explosive atmospheres.

Also allows the manufacturing having a stable granule composition with a high load of sulfur and higher efficiency of the composition as a fertilizer.

In another preferred embodiment of the second aspect, the urea granules of step b) are fully coated with a sulfur layer.

In another preferred embodiment of the second aspect, the urea granules have a particle size distribution measured by granulometry, wherein 80% of particles have a particle diameter from 0.5-7mm, preferably the particle diameter is from 2-5.5 mm. More preferably, the urea granules have a particle size distribution measured by granulometry, wherein 80% of particles have a particle diameter from 3.30mm to 6 mm, preferably form 3.30 mm to 5.5 mm and/or a 20% of the of particles have a particle diameter from 1 mm to 3.30mm, preferably from 2 to 3.30 mm. The process allows the manufacturing of a specific range of particle size of the urea granules, which helps to reduce the amount of ammonia lost and realise in the atmosphere, increasing the efficacy of the composition and the amount of nitrogen release in the soil.

In a preferred embodiment of the second aspect the binder is selected from the list consisting of water, molasse, wax, glycerin and combinations thereof.

The third aspect of the invention relates to a system for carrying out the method to the second aspect of the invention and/or suitable obtain the composition of the first aspect, the system comprising:
- a first hopper (1) configured for receiving urea granules to feed urea granules to a first worm screw (2),
- a second hopper (3) configured for receiving a binder and adapted to feed said binder to the feed urea granules deposited on the worm screw (2) or a binder tank (4) tank configured to feed the binder to the feed urea granules deposited on the worm screw (2),
- a third hopper (5) configured for receiving the micronized sulfur and to feed micronized sulfur to the worm screw (2),
- wherein the first worm screw is connected to the first hopper (1), the second hopper (3) or the binder tank (4), and the third hooper (5);
- a blending mixer (6) or a second worm screw (7) configured to homogenize solid mixtures, which are connected to the first worm screw (2), at the end section of said first warn screw (2),
- a housing (8) covering the first worm screw (2), which comprises at least one opening (9) configured to feed the granules and at least other 3 openings (10) configured to feed the binder and the sulfur inside the housing directly on the first worm screw (2),
   wherein the worm screw (2) is configured to convey urea granules, feed from the first hooper (1), while they are being coated with the binder from the second hooper (3) or the binder tank (4) and/or with the micronized sulfurfrom the third hooper (5) towards the blending mixer (6) or to the second worm screw (7).

In a preferred embodiment of the third aspect, the third hopper (5) is configured to feed the micronized sulfur at a speed from 5-100 rpm, preferably form 10-50 rpm. Preferably, the third hopper (5) can be connected to a reducer motor (12) with speed shifter or mechanical variator to provide a speed to feed the micronized sulfur from 5-100 rpm, preferably form 10-50 rpm. This ensures a good homogeneous coating of micronized sulfur on the surface of the granules, prevents caking of the sulfurparticles, and avoids or minimize the risk of explosion.

In a preferred embodiment of the third aspect, the housing (8) is configured to cover the first worm screw (2) to provide a closed environment. The term closed environment is understood as an environment preventing the continuous exchange of air and oxygen flow and/or to reduce the amount of oxygen. The housing (8) and the presence of the warn screw (2) provide a closed environment prevent contamination with external substances as well as prevent the generation of sparks and fire, thus reducing or minimizing the risk of explosion.

In a preferred embodiment of the third aspect the housing openings (10) comprise spray nozzles which are connected to the second hopper (3), binder tank or third hopper (5) configured for spraying liquids or powder inside the housing or into the components contained in the first worm screw (2).

In another preferred embodiment of the third aspect, the first worm screw (2) has a second opening (9) to the blending mixer (6) or to the second worm screw (7).

In another preferred embodiment of the third aspect, the blending mixer (6) or the second worm screw (7) are further connected to a storage silo (11).

The fourth aspect of the invention relates to the use of acomposition according to the first aspect or a composition obtained from the second aspect of the invention for fertilizing crops.

### EXAMPLES

### Example 1. Composition according the first aspect and the composition obtained from the second aspectof the invention

The composition was prepared by means of the process of the second aspect of the invention wherein 100 g urea granules (spherical granules having a diameter of 2-5mm) were coated with a first coat of 1 ml molasse, as a binder, and second coat of 4 g micronized sulfur 99.5% pure (having a particle sizeD(50): 45 microns) followed by a third coating comprising a 1 ml molasse, as a binder. The granules obtained were further mixed and homogenized to obtain the composition 1.

### Example 2. Composition according the first aspect and the composition obtained from the second aspectof the invention

The following compositions were prepared by means of the process of the second aspect of the invention wherein 100 g urea granules (spherical granules having a diameter of 2-5mm) were coated with a first coat of 1 ml water, as a binder, and second coat of 4 g micronized sulfur 99.5% pure (having a particle size D(50): 45 microns) followed by a third coating comprising a 1 ml water, as a binder. The granules obtained were further mixed and homogenized to obtain the composition 2.

### Example 3. Composition according the first aspect and the composition obtained from the second aspectof the invention

The following compositions were prepared by means of the process of the second aspect of the invention wherein 100 g urea granules (spherical granules having a diameter of 2-5mm) were coated with a first coat of 1 ml wax, as a binder, and second coat of 4 g micronized sulfur 99.5% pure (having a particle size D(50): 45 microns) followed by a third coating comprising a 1 ml wax, as a binder. The granules obtained were further mixed and homogenized to obtain the composition 3.

### Comparative examples

### Comparative Example 1. Composition according the first aspect and the composition obtained from the second aspectof the invention

The following compositions were prepared by means of the process of the second aspect wherein 100 g of urea granules (spherical granules having a diameter of 2-5mm) were coated with a first coat of binder (water). Afterward a coating of microgranules of sulfur dispersed in water was applied (1 ml of water and 5 g of sulfurhaving a particle size D(50): 150 microns) followed by a third coating comprising a binder (water). The granules obtained were further mixed and homogenized to obtain the comparative composition 4.

The effectiveness of the compositions of the invention was also tested and compared versus the commercialproductsNexur^{®} (which contains SO₃ and 0,09% of urea inhibitor NBPT) and Sulfamid^{®}(which contains 14% of SO₃)

### Quantification of ammonia release in the tested compositions.

The amount of nitrogen lost as ammonia was measure by the method described herein.

In order to simulate the soil conditions and behavior of the different products, the following methodology was designed based on the measurement of the ammonia released by the action of bacteria present in the soil on urea. In order to quantify the amount of ammonia (NH₃) released in a period of time, measuring pipettes, commonly used to measure levels of different gaseous pollutants in industrial processes, such as SO₂, H₂S or NH₃ among others, were used. These pipettes were designed to ensure the individual protection of workersand to control the exposure of workers to possible contaminants.

The basis of ammonia gas measurement pipettes (Drager measuring pipettes) is simple. Inside the pipette there is an inert reagent (silica gel, aluminum oxide, or aluminum silicate) impregnated with an indicator reagent. The reagent produces a colorimetric indication in the presence of a particular gas, vapor, or aerosol. In this case, it turns blue when ammonia is produced and reacts with the indicator present in the inert reagent. They are calibrated so that the volume of ammonia generated can be measured with different scale.

Some can be calibrated to measure small amount and others to measure higher amounts of ammonia. The amount of ammonia produced is quantified in ppm (parts per million). For instance, Drager measuring pipettes for ammonia have the following measurement intervals.

**Table 1. Drager measuring pipettes**

| Drager measuring pipettes | reference | Measurement Standard range | Measurement time in seconds |
|---|---|---|---|
| Ammonia 0.25/a | 8101711 | 0.25 to 3 ppm | 60 |
| Ammonia 0.5/a | CH 31 901 | 0.5 to 10 % vol | 20 |
| Ammonia 2/a | 6733 231 | 2 to 30 ppm | 60 |
| Ammonia 5/a | CH 20 501 | 5 to 70 ppm | 60 |
| | | 50 to 600 ppm | 10 |
| Ammonia 5/b | 81 01 941 | 5 to 100 ppm | 10 |

A systemcomprising the use of closed canisters was employed, on which a two-way system was devised to place 2 Drager ammonia measuring pipettes, one of them had was suitable to measure a range of ammonia from 0.25 to 3 ppm and the other a range of ammonia from 50 to 600 ppm. The objective of this is to be able to measure in a short time the amount of ammonia that is released and use the widest range to obtain data on the effect after several days of incubation of the different urea products. The short-range release pipette allows to assess the future phytotoxic effects on plants due to the burns caused by ammonia on plant cells. The wide-range pipette serves to assess the quantityof ammonia lost due to volatilization with the consequent loss of nutrients.

The protocol followed for the test consisted of adding to each bottle the following quantities:
- 200 cc of soil with a pH between 7.5-8
- 2 g of the product to be tested
- 50 ml of water

The amount of ppm of ammonia released was measured at variable time intervals (days)foreach of the products tested.

The experimental datashowed a reduction in the accumulative loss of nitrogen, as ammonia, from the compositions of the invention when compared to the other tested formulations and commercial products.

### Field Tests

The composition of the invention (Urea-DP) was also tested in the field, particularly in a wheat field in Zaragoza, Spain.

A pre-sowing treatment was carried out with 400 kg/ha of a fertilizer(NPK 8-15-15).

2 Plots of 200 m² were delimited. One of them was treated with 200 kg/ha of conventional urea fertilizer and the other with and 200 kg/ha of the composition4 of the invention (Urea-DP).

200 kg/ha of conventional urea and 200 kg/ha of sulfur-coated urea were applied in cover.

At the end of the cycle, the wheat was harvested from each plot and the kg/hectare in each plot was calculated. The results are shown in table 2.

**Table 2. Results of field trials, wheat production per field using (200 kg of composition/ha)**

| **TREATMENT** | **PRODUCTION (kg/ha)** |
|---|---|
| Urea | 3.436 |
| Urea + DP | 3.872 |

Thus, the production of wheat is significantly increased, by 12.7%, when the compositions of the invention are used.

## Claims

1. A fertilizing composition comprising:
- urea granules comprising urea in an amount from 95-100 % w/w of urea wherein the urea granules are in the composition in a range from 90-98% w/w;
- a layer which comprises sulfur having a particle size from 5 to 80 µm, measured by laser diffraction, and at least a binder;
wherein the urea granules are at least partially coated by the sulfur layer; and
wherein the layer is in an amount in the composition from 2-10% w/w.

2. The composition according to the preceding claim, wherein the sulfur is elemental sulfur.

3. The composition according to any of the preceding claims, wherein the sulfur has a particle size from 10-70 µm measured by laser diffraction, preferably from 30-55 µm.

4. The composition according to any of the preceding claims, wherein the sulfur is at least 95% pure, preferably at least 98% pure, more preferably, at least 99.5% pure.

5. The composition according to any of the preceding claims, wherein the composition is free of urease inhibitors selected form the list consisting of, N-(n-butyl) thiophosphorictriamide (NBPT) and N-(n-propyl) thiophosphorictriamide (NPPT).

6. The composition according to any of the preceding claims wherein the sulfur is in an amount in the composition from 1.9-9% w/w, preferably form 3-6 % w/w.

7. The composition according to any of the preceding claims, wherein the urea granules are in an amount in the composition from 93-97% a w/w.

8. The composition according to any of preceding claims, wherein the urea granules have a particle size distribution measured by granulometry, wherein 80% of particles have a particle diameter from 0.5-7mm, preferably the particle diameter is from 2-5.5 mm.

9. The composition according to any of the preceding claims, wherein the amount of binder in the composition is from 0.1%-2.5% w/w, preferably from 0.5%-1.5% w/w and/or the ratio of sulfur to binder is from 90 to 1 w/w, preferably from 15-5 w/w.

10. The composition according to any of the preceding claims, wherein the binder is selected from the list consisting of water, molasse, wax, glycerin and combinations thereof, preferably the binder is wax.

11. The composition according to any of the preceding claims, wherein the composition has a moisture content below 7%, preferably 3% or below 3%.

12. A method to prepare the composition according to any of the claims 1-11 comprising the steps of:
a- Coating urea granules, with a binder, in an amount from 0.1-4% w/w to the weight of the urea granules;
b-Applying a coating comprising sulfur onto the urea granules obtained in the previous step, to provide at least partially coated or fully coated sulfur urea granules,
c-Applying a second coating comprising binder onto the granules obtained in the previous step, wherein the amount of binder the weight of the granules to be coated, added in this step, is from 0.1-1% w/w to the weight of the granules;
d- mixing the granules obtained in the previous step at a temperature range from 5-30°C in a closed environment.

13. A system for carrying out the method according to any of claim 12 or to suitable to obtain a composition according to claims 1-11, the system comprising:
- a first hopper (1) configured for receiving urea granules to feed urea granules to a first worm screw (2),
- a second hopper (3) configured for receiving a binder and adapted to feed said binder to the feed urea granules deposited on the worm screw (2) or a binder tank configured to feed the binder to the feed urea granules deposited on the worm screw (2),
- a third hopper (5) configured for receiving the micronized sulfur and to feed micronized sulfur to the worm screw (2),
- wherein the first worm screw is connected to the first hopper (1), the second hopper (3) or the binder tank (4), and the third hooper (5);
- a blending mixer (6) or a second worm screw (7) configured to homogenize solid mixtures, which are connected to the first worm screw (2), at the end section of said first warn screw (2)
- a housing (8) covering the first worm screw (2), which comprises at least one opening (9) configured to feed the granules and at least other 3 openings (10) configured to feed the binder and the sulfur inside the housing directly on the first worm screw (2).
wherein the worm screw (2) is configured to convey urea granules, feed from the first hooper (1), while they are being coated with the binder form the second hooper (3) or the binder tank (4) and/or with the micronized sulfur from the third hooper (5) towards the blending mixer (6) or to the second worm screw (7).

14. The system according to claim 13, wherein the third hopper (5) is configured to feed the micronized sulfur at a speed from 5-100 rpm, preferably form 10-50 rpm and/or the housing (8) is configured to cover the first worm screw (2) to provide a closed environment.

15. Use of the composition according to any of claims 1-11, prepared according to claim 12 or prepared employing the system according to any of claim 13-14 for fertilizing crops.
